# EUROPEAN PATENT APPLICATION

(11) **EP 4 821 715 A1**
(43) Date of publication of application: **14.10.2026**
(21) Application number: 25170131.4
(22) Date of filing: 11.04.2025
(51) Int. Cl.: B60J 5/10

(54) **BACKDOOR ASSEMBLY FOR A VEHICLE, VEHICLE, AND METHOD FOR MANUFACTURING A BACKDOOR ASSEMBLY FOR A VEHICLE**

(71) Applicant: Volvo Car Corporation, 405 31 Göteborg (SE)
(72) Inventor: BERNQUIST, Jonas, 40531 Göteborg (SE); LÖFSTEDT, Eric, 40531 Göteborg (SE)
(74) Representative: Kransell & Wennborg KB

(57) **Abstract**

The disclosure relates to a backdoor assembly (12, 30, 80) for opening or closing a back opening (11) of a vehicle (10). The backdoor assembly (12, 30, 80) comprises a first metal panel (21, 61) comprising a window opening (14, 22b, 62c). The backdoor assembly (12, 30, 80) further comprises a second metal panel (26, 68). Further, the backdoor assembly (12, 30, 80) comprises an at least partially transparent window panel (25, 81). The window panel (25, 81) is fastened directly to a first portion (21a, 61a) of a surface of the first metal panel (21, 61) and covers the window opening (14, 22b, 62c). The second metal panel (26, 68) is arranged on a second portion (21b, 68b), different from the first portion (21a, 61a), of the surface of the first metal panel (21, 61). Further, the surface of the first metal panel (21, 61) is orientable towards an exterior of the vehicle (10). The disclosure further relates to a method.

## Description

### TECHNICAL FIELD

The present disclosure relates to a backdoor assembly for opening or closing a back opening of a vehicle.

The present disclosure also relates to a vehicle.

The present disclosure further relates to a method for manufacturing a backdoor assembly for opening or closing a back opening of a vehicle.

### BACKGROUND ART

Many vehicles comprise a rear trunk that is accessible from outside of the vehicle by opening a rear trunk lid. The trunk lid in some vehicle types such as hatchback, utility vehicles, and cross-overs, comprises a rear window integrated into the trunk lid for an enlarged and practical rear trunk opening. In such cases, the trunk lid may also be called a backdoor independent from the orientation of an orientation of an axis about which the backdoor may be rotated for moving it from a closed state into an open state and vice versa. Conventionally, such trunk lid layers panels and arranges the window onto the layered panels.

### SUMMARY

It is an objective of the present disclosure to further improve such trunk lids or backdoors.

The problem is at least partially solved or alleviated by the subject matter of the independent claims of the present disclosure, wherein further examples are incorporated in the dependent claims.

According to a first aspect, there is provided a backdoor assembly for opening or closing a back opening of a vehicle. The backdoor assembly comprises a first metal panel comprising a window opening. The backdoor assembly also comprises a second metal panel. The backdoor assembly further comprises an at least partially transparent window panel. The window panel is fastened directly to a first portion of a surface of the first metal panel and covers the window opening. The second metal panel is arranged on a second portion, different from the first portion, of the surface of the first metal panel. The surface of the first metal panel is orientable towards an exterior of the vehicle.

A longitudinal axis of the motor vehicle may be an axis parallel to the direction of travel of the motor vehicle, or simply a forward and backward direction. As used herein, a longitudinal axis (or longitudinal direction) is considered to coincide with, or be parallel to, a direction of travel of the motor vehicle. As used herein, a lateral axis (or lateral direction) of the motor vehicle is considered to be an axis perpendicular to the direction of travel of the motor vehicle, hence an axis perpendicular to the longitudinal axis. As used herein, a vertical axis (or vertical direction) of the motor vehicle is considered to be an axis orthogonal to a plane formed by the longitudinal and lateral axes.

Assuming a forward travel of the vehicle is in the positive direction of the longitudinal axis, a back opening of a vehicle may be an opening made in the vehicle in the backward travel direction, or in the negative direction of the longitudinal axis, for instance with respect to driver's seat of the vehicle.

The back opening may be an opening through which a trunk or boot of the vehicle is accessible from outside of the vehicle.

The back opening may be an opening of a trunk or an opening of a boot.

The backdoor assembly may be referred to as a tailgate, a trunk lid, a boot lid, or a rear tailgate, a rear trunk lid, or a rear boot lid.

The backdoor assembly may be pivotably connected to or hinged at an upper portion of the back opening of the vehicle. The upper portion of the back opening of the vehicle may be a laterally extending side of the back opening positioned higher along the vertical axis of the vehicle than other laterally extending sides of the back opening.

The backdoor assembly may alternatively be pivotably connected to or hinged at a side portion of the back opening of the vehicle. The side portion of the back opening of the vehicle may be a vertically extending side of the back opening positioned at either end of the back opening along the lateral axis of the vehicle.

The backdoor assembly may comprise a first surface and a second surface.

When the backdoor assembly closes the back opening, the first surface may face in the direction towards an interior of the vehicle and the second surface may face in the direction towards an interior of the vehicle.

When the backdoor assembly closes the back opening, the first surface may be accessible from the interior of the vehicle, and the first surface may not be accessible from the exterior of the vehicle, while the second surface may be accessible from the exterior of the vehicle, and the second surface may not be accessible from the interior of the vehicle.

The first surface may be a surface of the first metal panel, and the second surface may be a surface of the second metal panel. The first surface may be a tailgate inner surface, and the second surface may be a tailgate outer surface.

When the backdoor assembly opens, thereby opening the back opening, the first surface may face upwards, i.e., in a positive direction along a vertical axis of the vehicle, and the second surface may face downwards, i.e., in a negative direction along a vertical axis of the vehicle. This may be the case when the backdoor assembly is hinged at or along the upper edge of the backdoor opening.

When the backdoor assembly opens, thereby opening the back opening, the first surface may face either side of the sideways, i.e., either in a negative or positive direction along a lateral axis of the vehicle, and the second surface may face the other side, i.e., in a positive direction or negative direction, respectively, along a lateral axis of the vehicle. This may be the case when the backdoor assembly is hinged at or along either side portion of the back opening of the vehicle.

The first portion of the first metal panel may comprise the window opening.

The first portion of the first metal panel may comprise or be a portion of the first metal panel around or running around the window opening.

The first portion of the first metal panel may be separated from the second portion of the first metal panel by a crease line running along the first metal panel in a lateral direction of the motor vehicle.

The first portion of the metal panel may be bent, i.e., form an angle or radius, along the crease line with respect to the second portion of the metal panel.

The first portion may be a portion of the first meal panel comprised in a first space in a first direction from the crease line, and the second portion may be a portion of the first metal panel comprised in a second space in a second direction from the crease line.

The window opening may ensure the visibility of an occupant in the rear direction. Thus, the backdoor assembly may be assembled to the vehicle such that the window opening is on the eye-level of an occupant. Accordingly, the window opening may be positioned at a vertically higher position than a portion of the first metal panel to which the second metal panel is fastened. Thus, the first and second portion of the first metal panel may be referred to as an upper and a lower portion, respectively.

The second metal panel arranged on a second portion, different from the first portion, of the surface of the first metal panel, wherein the surface of the first metal panel is orientable towards an exterior of the vehicle, may render the second metal panel an outer skin of the backdoor assembly or an outside of the backdoor assembly.

The first metal panel may be made from sheet metal by deforming and/or stamping.

The second metal panel may be made from sheet metal by deforming and/or stamping.

The window panel described herein is used as a structural part of the backdoor assembly. That is, the window panel serves as a structural components which further contributes to the required mechanical properties of the backdoor, thereby maintaining the structural integrity of the backdoor assembly. This in turn simplifies, structurally, the tailgate outer layer, and leads to a reduced weight. In this regards, the backdoor assembly according to the first aspect may advantageously achieve, among others, the effects listed herein without compromising, at least not substantially, the structural integrity of the backdoor assembly.

Further, the backdoor assembly according to the first aspect may advantageously achieve, among others, reducing the weight of the backdoor assembly, thereby reducing the overall weight of the motor vehicle, once the backdoor assembly is assembled thereto. This may be specifically achieved by having the second metal panel arranged on the second portion of the first metal. In other words, the size of the tailgate outer layer is reduced, at least by the first portion of the tailgate inner layer. This also means that the backdoor assembly according to the first aspect may advantageously achieve, among others, improving, e.g. by reducing, the material usage, thereby improving the sustainability.

Additionally, or alternatively, the backdoor assembly according to the first aspect may advantageously achieve, among others, reducing the stamping restrictions for the second metal plate, or the tailgate outer layer, and thereby increasing the design freedom and further reducing the number of required parts.

Additionally, or alternatively, the backdoor assembly according to the first aspect may advantageously achieve, among others, improving access for welding reinforcements. This is specifically achieved by having the second metal panel being arranged on the second portion of the first metal panel, leaving opening the access to the first metal panel.

In an example, the first portion of the surface of the first metal panel comprises or is a frame portion around the window opening.

The frame portion may herein be referred to as a window frame.

The frame portion may surround the window opening.

An inner edge of the frame may at least partially share the boundary with and/or define the boundary of the window opening.

The backdoor assembly according to the example above may advantageously achieve, among others, further reducing the weight of the backdoor assembly. This may be particularly evident when considering that the window frame portion may form a significant portion of the total sum weight of the backdoor assembly.

Additionally or alternatively, the backdoor assembly according to the example above may advantageously achieve, among others, further improving, e.g. by reducing, the material usage. Specifically, a window opening may form by removing a material corresponding to the size of the window opening, and the removed material may not be used for producing another backdoor. Thus, by having the second metal panel being arranged only on the second portion of the first metal panel, thereby removing the need to layer the second metal panel on the first portion of the first metal panel, the need for removing a window opening on the second metal panel may be eliminated.

In an example, the frame portion at least partially has a U-shaped cross-section. The window panel closes the U-shaped cross-section such that a cavity is formed, delimited by the U-shaped cross-section of the frame portion and the window panel.

The cross-section may be a surface made by slicing a plane through the window panel, the frame portion, and at least one part of the frame portion fastened to the window panel.

An object may be U-shaped, when the object comprises at least a portion that follows a general trajectory of the letter "U", i.e., a first straight line followed by a curved line, or at least one cornered lines, which in turn is followed by a second straight line. The first straight line and the second straight line may be non-parallel to one another.

Alternatively or additionally, the frame portion comprises a V-shaped cross-section, or a C-shaped cross section.

A cavity may be an inner space formed by the curvature of the frame portion. The inner space may be defined by a space or volume comprising a central point where at least two vectors starting from respective points on a surface cross.

The backdoor assembly according to the example above may advantageously achieve, among others, improving the structural rigidity of the window frame.

In an example, the cavity is a reception space for a functional component of the backdoor assembly.

The reception space may refer to a space enabling packing or placing of further component(s).

The functional component may comprise or is a sensor, a light source, a transceiver, and an antenna.

The backdoor assembly according to the example above may advantageously achieve, among others, improving packaging of further modules, specifically functional modules. For instance, the cavity may facilitate, i.e., can be used to fit in, a sensor, a light source, an antenna, and so forth. These functionalities of such modules may be ensured by the material properties of the window panel. For instance, the at least partially transparent window panel may allow the light and/or antenna signal to pass therethrough.

In an example, the window panel is fastened to the first metal panel using an adhesive.

The adhesive may comprise or be a Polyurethane reactive (PUR) adhesive.

The backdoor assembly according to the example above may advantageously achieve, among others, improving the water tightness around the window opening.

Additionally, or alternatively, the backdoor assembly according to the example above may advantageously achieve, among others, further improving the overall stiffness of the backdoor assembly.

In an example, the window panel and the second metal panel have an overlap.

The portion of the second metal panel overlapping with the window panel may overlap with a part of the first portion of the first metal panel.

The backdoor assembly according to the example above may advantageously achieve, among others, further improving the rigidity and structural integrity of the backdoor assembly without fully layering the second metal panel all around the window frame of the first metal panel.

In an example, the window panel and the second metal panel are fastened to one another.

The portion of the second metal panel overlapping with the window panel may be fastened to the window panel.

The backdoor assembly according to the example above may advantageously achieve, among others, further providing integration possibilities to fasten the window panel.

According to a second aspect, there is provided a vehicle comprising the backdoor assembly according to any one of the preceding claims.

The backdoor assembly may be pivotably connected to or hinged at an upper portion of the back opening of the vehicle. The upper portion of the back opening of the vehicle may be a laterally extending side of the back opening positioned higher along the vertical axis of the vehicle than other laterally extending sides of the back opening.

When the backdoor assembly closes the back opening, the first surface may face in the direction towards an interior of the vehicle and the second surface may face in the direction towards an interior of the vehicle.

When the backdoor assembly closes the back opening, the first surface may be accessible from the interior of the vehicle, and the first surface may not be accessible from the exterior of the vehicle, while the second surface may be accessible from the exterior of the vehicle, and the second surface may not be accessible from the interior of the vehicle.

When the backdoor assembly opens, thereby opening the back opening, the first surface may face upwards, i.e., in a positive direction along a vertical axis of the vehicle, and the second surface may face downwards, i.e., in a negative direction along a vertical axis of the vehicle.

The window opening may ensure the visibility of an occupant in the rear direction. Thus, the backdoor assembly may be assembled to the vehicle such that the window opening is on the eye-level of an occupant. Accordingly, the window opening may be positioned at a vertically higher position than a portion of the first metal panel to which the second metal panel is fastened. Thus, the first and second portion of the first metal panel may be referred to as an upper and a lower portion, respectively.

The vehicle according to the second aspect may advantageously achieve, among others, reducing the weight of the backdoor assembly, thereby reducing the overall weight of the motor vehicle, once the backdoor assembly is assembled thereto.

Additionally, or alternatively, the vehicle according to the second aspect may advantageously achieve, among others, reducing the stamping restrictions for the second metal plate, or the tailgate outer layer, and thereby increasing the design freedom and further reducing the number of required parts.

Additionally, or alternatively, the vehicle according to the second aspect may advantageously achieve, among others, improving access for welding reinforcements.

The vehicle according to the second aspect may advantageously achieve, among others, the aforementioned effects without compromising, at least not substantially, the structural integrity of the backdoor assembly.

According to a third aspect, there is provided a method for manufacturing a backdoor assembly for opening or closing a back opening of a vehicle. The method comprises fastening a window panel directly on a first portion of a surface of a first metal panel and thereby covering a window opening of the first metal panel. The method also comprises arranging a second metal panel on a second portion, different from the first portion, of the surface of the first metal panel. The surface of the first metal panel is orientable towards an exterior of the vehicle.

The method according to the third aspect may be performed by firstly fastening a window panel directly on a first portion of a surface of a first metal panel and thereby covering a window opening of the first metal panel, and then secondly arranging a second metal panel on a second portion, different from the first portion, of the surface of the first metal panel.

Alternatively, the method according to the third aspect may be performed by firstly arranging a second metal panel on a second portion, different from a first portion of a surface of a first metal panel, of a surface of a first metal panel, and then secondly fastening a window panel directly on the first portion and thereby covering a window opening of the first metal panel.

The backdoor assembly may be a backdoor assembly according to any one of the examples of the first aspect.

The method according to the third aspect may contribute to advantageously achieving, among others, a reduction in the weight of the backdoor assembly, thereby reducing the overall weight of the motor vehicle, once the backdoor assembly is assembled thereto.

Additionally, or alternatively, the method according to the third aspect may contribute to advantageously achieving, among others, a reduction in the stamping restrictions for the second metal plate, or the tailgate outer layer, and thereby increasing the design freedom and further reducing the number of required parts.

Additionally, or alternatively, the method according to the third aspect may contribute to advantageously achieving, among others, an improvement in access for welding reinforcements.

The method according to the third aspect may advantageously achieve, among others, the aforementioned effects without compromising, at least not substantially, the structural integrity of the backdoor assembly.

In an example, fastening the window panel directly on the first portion of the surface of the first metal panel involves closing a cavity provided in the first metal panel.

In an example, the method further comprises arranging a functional component in the cavity before closing the cavity using the window panel.

The cavity is a reception space for a functional component of the backdoor assembly.

The reception space may refer to a space enabling packing or placing of further component(s).

The functional component may comprise or is a sensor, a light source, a transceiver, and an antenna.

The method according to the example above may advantageously achieve, among others, improving water tightness and securing the packaging of further modules, specifically functional modules fitted into the cavity.

In an example, the window panel is fastened to the first metal panel using an adhesive.

The adhesive may comprise or be a Polyurethane reactive (PUR) adhesive.

The method according to the example above may advantageously achieve, among others, improving the water tightness around the window opening.

Additionally, or alternatively, the method according to the example above may advantageously achieve, among others, further improving the overall stiffness of the backdoor assembly.

In an example, the method further comprises fastening the second metal panel and the window panel to one another.

In an example, the window panel and the second metal panel have an overlap.

The portion of the second metal panel overlapping with the window panel may overlap with a part of the first portion of the first metal panel.

The portion of the second metal panel overlapping with the window panel may be fastened to the window panel.

The method according to the example above may advantageously achieve, among others, further providing integration possibilities to fasten the window panel.

The method according to the example above may advantageously achieve, among others, further improving the rigidity and structural integrity of the backdoor assembly without fully layering the second metal panel all around the window frame of the first metal panel.

It should be noted that the above examples may be combined with each other irrespective of the aspect involved. Accordingly, features, effects and advantages explained in connection with one out of the backdoor according to the present disclosure, the vehicle according to the present disclosure, and the method of the present disclosure also apply to any other one of the backdoor according to the present disclosure, the vehicle according to the present disclosure, and the method of the present disclosure.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to an example of the present disclosure comprising a back opening and a backdoor assembly according to an example of the present disclosure for opening or closing the back opening of the vehicle
- Figure 2: shows an exploded view of a backdoor assembly according to an example of the present disclosure for opening or closing the back opening of the vehicle
- Figure 3: shows an assembled view of a backdoor assembly according to an example of the present disclosure for opening or closing the back opening of the vehicle
- Figure 4: shows a cross-sectional view of a backdoor assembly according to an example of the present disclosure for opening or closing the back opening of the vehicle
- Figure 5: shows an exploded view of a backdoor assembly according to an example of the present disclosure for opening or closing the back opening of the vehicle
- Figure 6: shows an assembled view of a backdoor assembly according to an example of the present disclosure for opening or closing the back opening of the vehicle
- Figure 7: shows a complete assembled view of the backdoor assembly according to an example of the present disclosure comprising a window panel fastened to the part of the backdoor assembly shown in Figure 6
- Figure 8: shows a across-sectional view of the complete assembled view of the backdoor assembly shown in Figure 7
- Figure 9: shows a method for manufacturing a backdoor assembly for opening or closing the back opening of the vehicle according to an example of the present disclosure

### DETAILED DESCRIPTION

The Figures are merely schematic representations and serve only to illustrate examples of the disclosure. Identical or equivalent elements are in principle provided with the same reference signs.

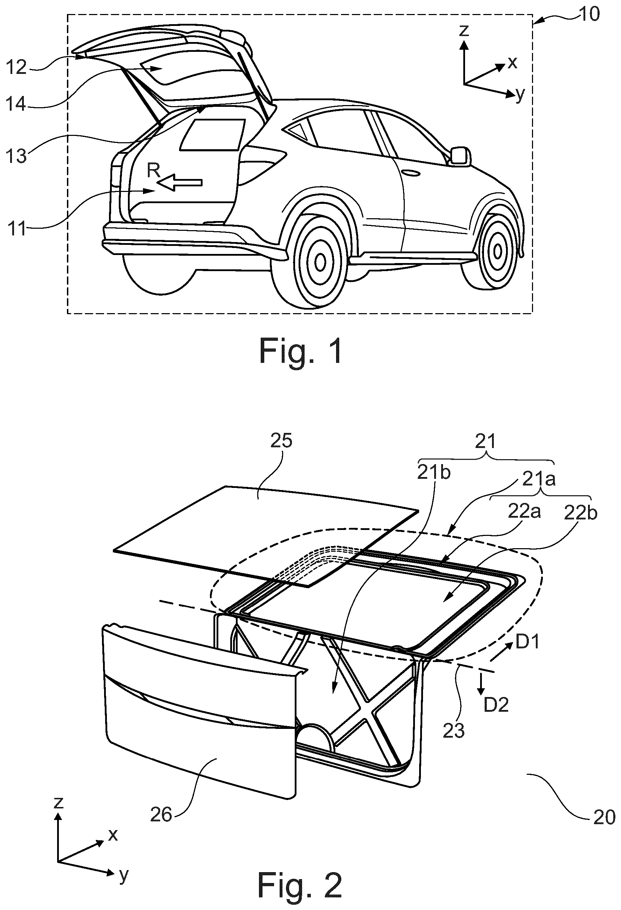

Figure 1 illustrates a vehicle 10. In reference to the coordinate system of Figure 1, the vehicle 10 is oriented according to: a longitudinal axis (or longitudinal direction) of the motor vehicle 10, coinciding with, or parallel to, the x-axis x of the coordinate system of Figure 1, where the longitudinal direction is herein also referred to a direction of travel of the vehicle 10; a lateral axis (or lateral direction) of the vehicle 10, perpendicular to the direction of travel of the vehicle 10, hence, perpendicular to the longitudinal axis, coinciding with, or parallel to, the y-axis y of the coordinate system of Figure 1; and a vertical axis (or vertical direction) of the vehicle 10, perpendicular to both the vertical and lateral axes and coinciding with, or parallel to, the z-axis (z) of the coordinate system of Figure 1.

The vehicle 10 comprises a trunk. The trunk space is accessible from outside of the vehicle 10 through a back opening 11 of the vehicle 10. The back opening 11 is an opening of the vehicle 10 made on the rear side of the vehicle 10, i.e., in the negative direction along the x-axis in Figure 1. The back opening 11 is opened or closed by opening or closing a backdoor 12 assembly, or simply a backdoor 12, of the vehicle 10. The backdoor 12 is pivotally connected to the vehicle 10 at a hinge 13 which allows for opening and closing the backdoor 12. The backdoor 12 comprises a window opening 14 for the visibility in the rear direction R from occupant seats of the vehicle 10. The details of the backdoor 12 are further elaborated in reference to the following figures.

Figure 2 illustrates an exploded view of an example of the backdoor 12 of Figure 1.

The exploded view of the backdoor 20 illustrates individual components comprised in the backdoor 20. The backdoor 20 comprises a first metal panel 21 that is bent along a crease line, or a crease axis 23, at an angle. Herein, portions of the first metal panel in a first direction and a second direction from the crease axis 23 are referred to as a first portion 21a and a second portion 21b of the first metal panel 21, respectively. The first portion 21a of the first metal panel 21 comprises a window opening 22b and a frame 22a around the window opening, thus also referred to as a window frame herein. The window frame 22a is formed for instance by removing a section of the first portion 21a of the first metal panel 21 corresponding to the size of the window opening 22b.

The backdoor 20 further comprises a second metal panel 26 for fastening to an exterior-facing side, i.e., in the negative direction along the x-axis in Figure 2, of the second portion 21b of the first metal panel 21.

Further, the backdoor 20 comprises a window panel 25 for fastening to an exterior-facing side of the first portion 21a of the first metal panel 21a, thereby covering the window opening 22b.

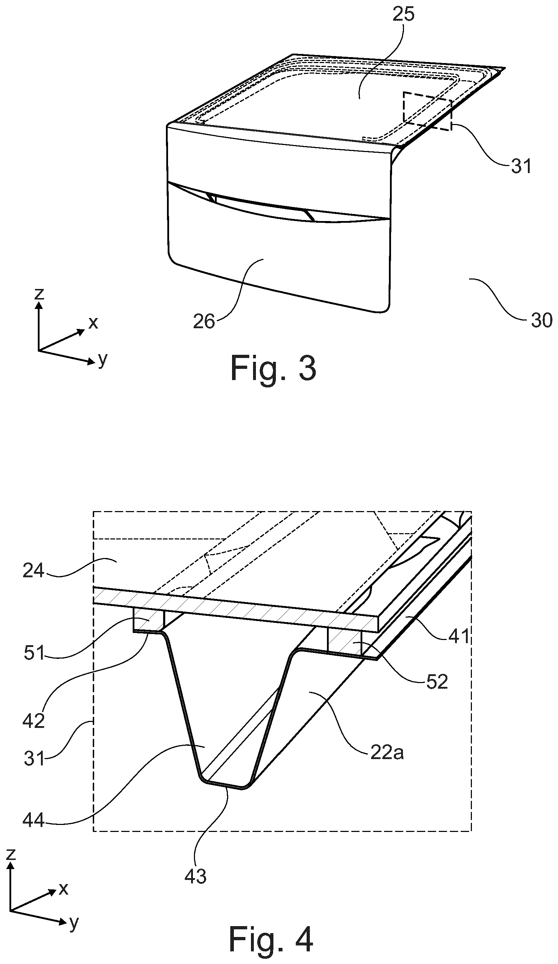

Figure 3 illustrates an assembled view of the backdoor 30.

The assembled view of the backdoor 30 illustrates a complete backdoor assembly formed by assembling the individual components of the backdoor 20 illustrated in Figure 2.

The window panel 25 is fastened directly to the first portion 21a of the first metal panel 21 without any overlap with the second panel 26. Specifically, the window panel 25 is fastened to the window frame 22a of the first metal panel 21.

The assembly of the first portion 21a of the first metal panel 21 with the window panel 25 arranged thereon is illustrated further in detail in reference to a cross-sectional view 31 slicing through the window panel 25 and the window frame 22a as shown in Figure 4.

In reference to Figure 4, the window frame 22a comprises a substantially U-shaped groove 43 running through the middle of the window frame 22a, thereby forming a cavity 44 in a groove channel. A portion of the window frame 22a along one edge of the U-shaped groove channel is an inner edge 42 of the window frame 22a, and another portion of the window frame 22a along the other edge of the U-shaped groove channel is an outer edge 41 of the window frame 22a. The inner edge 42 of the window frame 22a shares the boundary with the window opening 22b and the outer edge 41 of the window frame 22a shares the boundary with the first portion 21a of the first metal panel 21. Both the inner edge 42 and the outer edge 41 comprise respective exterior-facing surfaces, to which the window panel 25 is adhered using an adhesive 51 and 52 such as glue. The at least partially transparent characteristics of the window panel 25 ensures the visibility into the cavity 44 in the groove channel through the window frame 22a. Such cavity 44, or in other words the space formed by the groove channel and inside the groove channel, can be utilized for various purposes including packing functional components such as a lamp, an antenna, a sensor, and so forth.

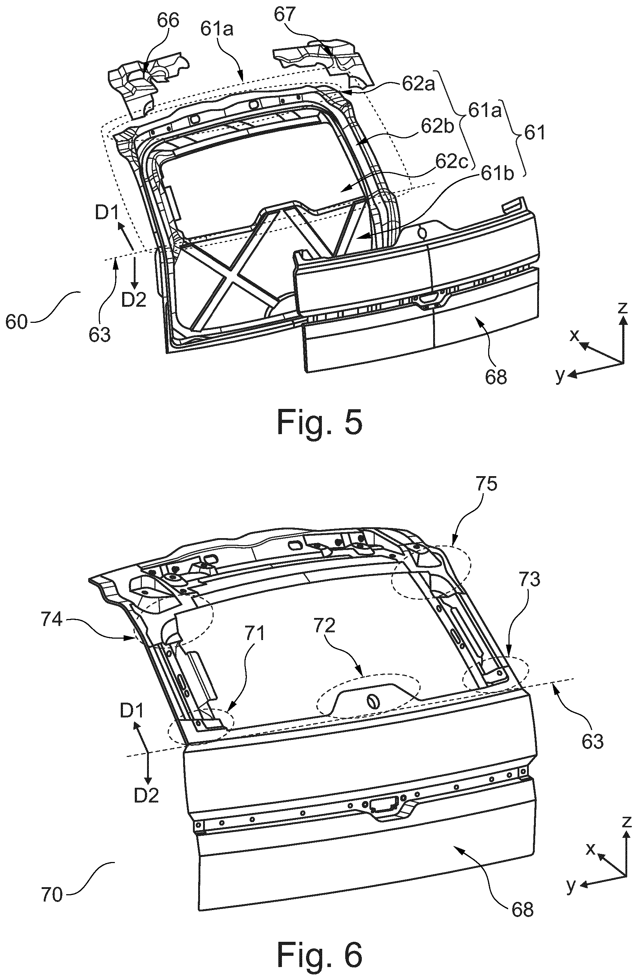

Figure 5 illustrates an exploded view of another example of the backdoor 12 of Figure 1.

The exploded view of the backdoor illustrates individual components comprised in the backdoor 60. The backdoor 60 comprises a first metal panel 61that is bent along a crease axis 63 at an angle. Herein, portions of the first metal panel 61 in a first direction D1 and a second direction D2 from the crease axis 63 are referred to a first portion 61 and a second portion 61b of the first metal panel 61, respectively. The first portion 61a of the first metal panel 61 comprises a window opening 62c and a window frame 62b around the window opening 62c. The window frame 62b is formed for instance by removing a section of the first portion 61a of the first metal panel 61 corresponding to the size of the window opening 62c.

The backdoor 60 also comprises hinge reinforcements 66 and 67 for reinforcing a hinging portion 62a of the backdoor 12, i.e., corners of the window frame 61a away from the crease axis 63 in the first direction D1. Respective hinge overlaps 74 and 75 of the hinge reinforcements 66 and 67 overlap with the window panel 81, once the window panel 81 is arranged on the window frame 62b. That is, a portion of the window frame 62b covered by the hinge overlaps 66 and 67 are not directly fastened to the window panel 81, but instead the corresponding portion of the window frame 62b is fastened directly to the hinge overlaps 74 and 75, which in turn is fastened to the window panel.

The backdoor 60 further comprises a second metal panel 68 for fastening to an exterior-facing side, i.e., in the negative direction along the x-axis in Figure 3, of the second portion 61b of the first metal panel 61. The second metal panel 68 comprises panel overlaps 71, 72, and 73, which overlap with the window panel 81, once the window panel 81 is arranged on the window frame 62b. That is, a portion of the window frame 62b covered by the panel overlaps 71, 72, and 73 are not directly fastened directly to window panel 81, but instead the corresponding portion of the window frame 62b is fastened directly to the panel overlaps 71, 72, and 73, which in turn is fastened to the window panel 81. The panel overlaps 71, 72, and 73 may also be bent about the crease axis 63 at an angle in a similar manner as the bent portion of the first metal panel 61.

The assembled view of the backdoor 70 shown in Figure 6 illustrates a partial backdoor 70 assembly formed by assembling the individual components of the backdoor 70 illustrated in the exploded view of the backdoor 60 as shown in Figure 5.

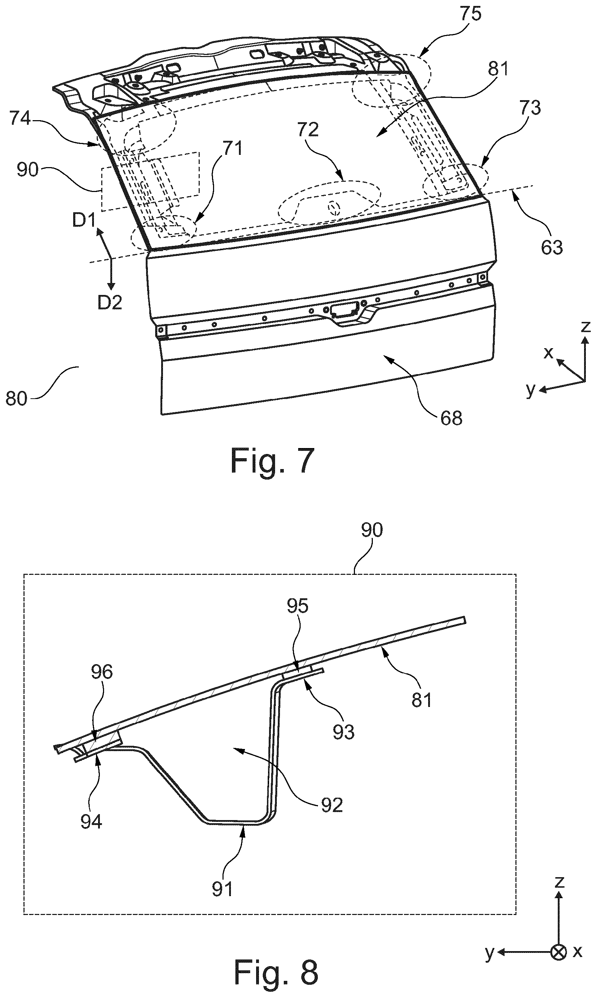

Figure 7 illustrates a complete assembled view of the backdoor 80 showing a complete backdoor 80 assembly formed by arranging a window panel on the partial backdoor 70 assembly shown in the assembled view shown in Figure 6.

The window panel 81 is arranged on the first portion 61a of the first metal panel 61 and covers the window opening 62c of the first metal panel 61. Specifically, the window panel 62c is fastened directly to the window frame 62b. As explained above in reference to Figure 3, the hinge overlaps 66 and 67 and the panel overlaps 71, 72, and 73 overlap with the window panel 81.

The assembly of the first portion 61a of the first metal panel 61 with the window panel 81 arranged thereon is illustrated further in detail in reference to a cross-sectional view 90.

Referring to Figure 8, the window frame 62b (discussed and shown in connection to previously discussed Figures) comprises a substantially U-shaped groove 91 running through the middle of the window frame, thereby forming a cavity 92 in the groove channel. A portion of the window frame along one edge of the U-shaped groove channel is an inner edge 93 of the window frame 62b, and another portion of the window frame along the other edge of the U-shaped groove channel is an outer edge 94 of the window frame 62b. The inner edge 93 of the window frame 62b shares the boundary with the window opening 62c and the outer edge 94 of the window frame shares the boundary with the first portion 61a of the first metal panel 61. Both the inner edge 93 and the outer edge 94 comprise respective exterior-facing surfaces, to which the window panel is adhered using an adhesive 95 and 96 such as glue. Alternatively, the window panel 81 is adhered only to the exterior-facing surface of the outer edge 94, and the window panel 81 is not adhered to the exterior-facing surface of the inner edge 93. The at least partially transparent characteristics of the window panel 81 ensures the visibility into the cavity 92 in the groove channel through the window panel. Such cavity 92, or in other words the space formed by the groove channel, can be utilized for various purposes including packing of functional components such as a lamp, an antenna, a sensor, and so forth.

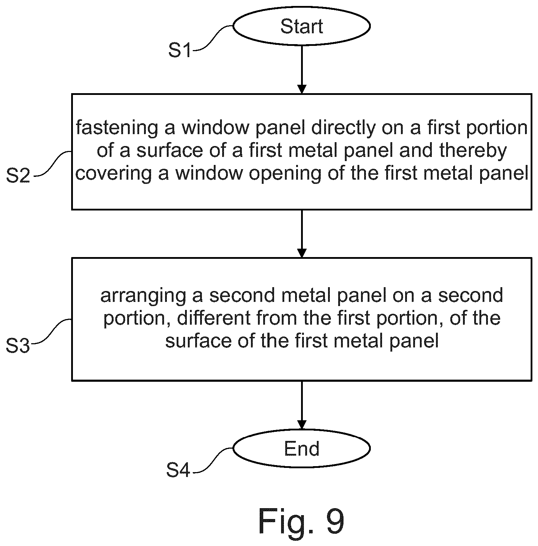

Figure 9 illustrates a method for manufacturing a backdoor assembly 12, 30, and 80 for opening or closing a back opening 11 of a vehicle 10.

At step S1, the method starts.

At step S2, a window panel 25 and 81 is fastened directly on a first portion 21a and 61a of a surface of a first metal panel 21 and 61 and thereby covering a window opening 14, 22b, and 62c of the first metal panel 21 and 61.

At step S3, a second metal panel 26 and 68 is arranged on a second portion 21b and 68b, different from the first portion 21a and 61a, of the surface of the first metal panel 21 and 61.

The surface of the first metal panel 21 and 61 is orientable towards an exterior of the vehicle 10.

At step S4, the method ends.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: Vehicle
- 11: Back opening
- 12: Backdoor assembly
- 13: Hinge
- 20: Backdoor (exploded view)
- 21: First metal panel
- 21a: First portion of the first metal panel
- 21b: Second portion of the first metal panel
- 22a: Frame
- 22b: Window opening
- 23: Crease axis
- 24: Window opening
- 25: Second metal panel
- 26: Window panel
- 30: Backdoor (assembled view)
- 31: Cross-sectional view
- 41: Outer edge
- 42: Inner edge
- 43: U-shaped cross-section
- 51: Inner adhesive
- 52: Outer adhesive
- 60: Backdoor (exploded view)
- 61: First metal panel
- 61a: First portion of the first metal panel
- 61b: Second portion of the first metal panel
- 62a: Hinge edge
- 62b: Frame
- 62c: Window opening
- 63: Crease axis
- 66: First hinge reinforcement
- 67: Second hinge reinforcement
- 68: Second metal panel
- 70: Partial backdoor (assembled view)
- 71: First panel overlap
- 72: Second panel overlap
- 73: Third panel overlap
- 74: First hinge overlap
- 75: Second hinge overlap
- 80: Backdoor (complete assembled view)
- 81: Window panel
- 90: Cross-sectional view
- 91: First portion of the first metal panel
- 92: Cavity
- 93: Inner edge
- 94: Outer edge
- 95: Inner adhesive
- 96: Outer adhesive
- S1: Start
- S2: First step
- S3: Second step
- S4: End

## Claims

1. A backdoor assembly (12, 30, 80) for opening or closing a back opening (11) of a vehicle (10), the backdoor assembly (12, 30, 80) comprising:
- a first metal panel (21, 61) comprising a window opening (14, 22b, 62c);
- a second metal panel (26, 68); and
- an at least partially transparent window panel (25, 81),
wherein the window panel (25, 81) is fastened directly to a first portion (21a, 61a) of a surface of the first metal panel (21, 61) and covers the window opening (14, 22b, 62c),
wherein the second metal panel (26, 68) is arranged on a second portion (21b, 68b), different from the first portion (21a, 61a), of the surface of the first metal panel (21, 61), and
wherein the surface of the first metal panel (21, 61) is orientable towards an exterior of the vehicle (10).

2. The backdoor assembly (12, 30, 80) of claim 1, wherein the first portion (21a, 61a) of the surface of the first metal panel (21, 61) comprises or is a frame portion (22a, 62b) around the window opening (14, 22b, 62c).

3. The backdoor assembly (12, 30, 80) of claim 2, wherein the frame portion at least partially has a U-shaped cross-section (43, 91), wherein the window panel (25, 81) closes the U-shaped cross-section (43, 91) such that a cavity (44, 92) is formed, delimited by the U-shaped cross-section (43, 91) of the frame portion and the window panel (25, 81).

4. The backdoor assembly (12, 30, 80) of claim 3, wherein the cavity (44, 92) is a reception space for a functional component of the backdoor assembly (12, 30, 80).

5. The backdoor assembly (12, 30, 80) of any one of the preceding claims, wherein the window panel (25, 81) is fastened to the first metal panel (21, 61) using an adhesive (51, 52, 93, 94).

6. The backdoor assembly (12, 30, 80) of any one of the preceding claims, wherein the window panel (25, 81) and the second metal panel (26, 68) have an overlap (71, 72, 73).

7. The backdoor assembly (12, 30, 80) of any one of the preceding claims, wherein the window panel (25, 81) and the second metal panel (26, 68) are fastened to one another.

8. A vehicle (10) comprising the backdoor assembly (12, 30, 80) according to any one of the preceding claims.

9. A method for manufacturing a backdoor assembly (12, 30, 80) for opening or closing a back opening (11) of a vehicle (10), the method comprising:
fastening a window panel (25, 81) directly on a first portion (21a, 61a) of a surface of a first metal panel (21, 61) and thereby covering a window opening (14, 22b, 62c) of the first metal panel (21, 61); and
arranging a second metal panel (26, 68) on a second portion (21b, 68b), different from the first portion (21a, 61a), of the surface of the first metal panel (21, 61),
wherein the surface of the first metal panel (21, 61) is orientable towards an exterior of the vehicle (10).

10. The method of claim 9, wherein fastening the window panel (25, 81) directly on the first portion (21a, 61a) of the surface of the first metal panel (21, 61) involves closing a cavity (44, 92) provided in the first metal panel (21, 61).

11. The method of claim 10, further comprising arranging a functional component in the cavity (44, 92) before closing the cavity (44, 92) using the window panel (25, 81).

12. The method of any one of claims 9 to 11, wherein the window panel (25, 81) is fastened to the first metal panel (21, 61) using an adhesive.

13. The method of any one of claims 9 to 12, further comprising fastening the second metal panel (26, 68) and the window panel (25, 81) to one another.
